(19) **Europäisches Patentamt**

**European Patent Office**

**Office européen des brevets**

(11) **EP 1 081 477 B1**

(12) **EUROPEAN PATENT SPECIFICATION**

(45) Date of publication and mention
of the grant of the patent:
**18.10.2006 Bulletin 2006/42**

(51) Int Cl.:
*G01K 7/01* (2006.01)     *G01K 3/00* (2006.01)

(21) Application number: **99830540.3**

(22) Date of filing: **31.08.1999**

(54) **CMOS Temperature sensor**

Temperaturfühler in Cmos-Technologie

Capteur de température en technologie Cmos

(84) Designated Contracting States:
**DE FR GB IT**

(43) Date of publication of application:
**07.03.2001 Bulletin 2001/10**

(73) Proprietor: **STMicroelectronics S.r.l.**
**20041 Agrate Brianza (Milano) (IT)**

(72) Inventors:
• **Matranga, Giovanni**
**95100 Catania (IT)**
• **Lo Coco, Luca**
**90046 Monreale (PA) (IT)**
• **Compagno, Giuseppe**
**95100 Catania (IT)**

(74) Representative: **Botti, Mario**
**Botti & Ferrari S.r.l.,**
**Via Locatelli, 5**
**20124 Milano (IT)**

(56) References cited:
• **SZEKELY V ET AL: "CMOS SENSORS FOR ON.LINE THERMAL MONITORING OF VLSI CIRCUITS" IEEE TRANSACTIONS ON VERY LARGE SCALE INTEGRATION (VLSI) SYSTEMS, US,IEEE INC. NEW YORK, vol. 5, no. 3, page 270-276 XP000701404 ISSN: 1063-8210**
• **BROKAW A P: "A TEMPERATURE SENSOR WITH SINGLE RESISTOR SET-POINT PROGRAMMING" IEEE JOURNAL OF SOLID-STATE CIRCUITS,US,IEEE INC. NEW YORK, vol. 31, no. 12, page 1908-1915 XP000691809 ISSN: 0018-9200**
• **BIANCHI R A ET AL: "CMOS compatible temperature sensor based on the lateral bipolar transistor for very wide temperature range applications" SENSORS AND ACTUATORS A, CH,ELSEVIER SEQUOIA S.A., LAUSANNE, vol. 71, no. 1-2, page 3-9 XP004140066 ISSN: 0924-4247**

**Description**

This invention broadly relates to a CMOS technology temperature sensor adapted for operation in a wide range of supply voltages.

For example, the sensor of this invention can be operated within a range of 7V to 1.8V, at a current consumption of about 2.8μA.

In particular, the invention relates to a temperature sensor of a type comprising a first circuit portion arranged to generate an electric signal whose value increases with the temperature to be sensed, a second circuit portion arranged to generate an electric signal whose value decreases with the temperature to be sensed, and a comparator for comparing the values of both signals.

Prior Art

As is well known, temperature sensors are incorporated to a number of electronic circuits for a variety of purposes, such as controlling dissipation from integrated circuits whose overtaking of a safe temperature limit must be signaled, or where the operating range of temperatures requires to be limited for a predeterminate electronic system.

More particularly, temperature detectors have been used as security arrangements for monitoring the operating temperature of non-volatile memories of the EEPROM type used in so-called Smartcards.

Smartcards are plastics cards having an integrated circuit, such as a memory circuit or a microcontroller, embedded therein. These cards are growing in popularity for a variety of applications, including credit/debit cards, POS cards, telephone cards, access control cards, etc..

Smartcards are to meet strict security requirements, and this has resulted in the constant development of intrusion-defeating arrangements of improved effectiveness. One possible form of such intrusions is represented by exposing a card to a heat source so as to alter the operation of the integrated circuit contained therein.

Many intrusions into smart cards can be attempted by technique known as DPA (Differential Power Analysis), fully dealt in the literature.

Also known is to use security arrangements of either the hardware or the firmware type. These arrangements are being regularly re-designed for improved security. Such arrangements include:

using advanced 0.35-micron technologies to minimize both the size and the consumption rate of the integrated circuit, as well as relative variations in its operational parameters; when combined with a screening metallization level, this makes DPA attempts less likely to succeed;

using specific operational software for the internal timing of the integrated circuit, whereby high variability is introduced in the operation scans when such operations are carried out;

using a modular design which enables the circuit hardware to be quickly modified for immediately counteracting any new forms of intrusive attempts;

using a series of hardware mechanisms, such as thermal protectors, for example, which enable the integrated circuit resident applications to detect and react as appropriate to the occurrence of any operational conditions which might intimate or be a factual indication of intrusive attempts.

The present invention provides an improvement in resident thermal protectors for an integrated circuit requiring such protection.

In general, temperature can be measured in integrated circuits on the basis of a voltage differential ΔVbe which is proportional to temperature (PTAT), and a voltage value which is proportional to Vbe and decreases linearly with temperature (CTAT).

In other instances, a comparison of a temperature-stable reference voltage which may be obtained from a bandgap generator or by compensation between a voltage VPTAT and a voltage VCTAT, and a voltage that varies linearly with temperature, is performed.

There also exist circuits effecting a direct comparison of a voltage which increases linearly with temperature and a voltage which decreases linearly with temperature.

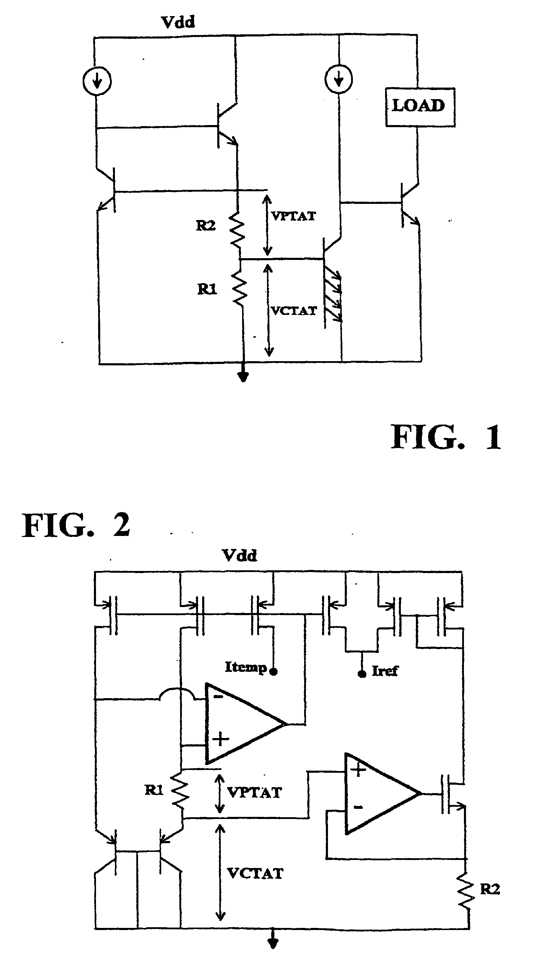

Such is the case, for example, with the circuit shown schematically in Figure 1, which illustrates a temperature sensor formed with bipolar technology. This type of sensor is described in IEEE Journal of Solid-State Circuits, Vol. 31, No. 12, Dec. 1996, page 1912, for example.

The sensor of Figure 1 exemplifies how a voltage VPTAT and a voltage VCTAT can be compared to cause the output to switch over at a desired temperature.

In all cases, an analog signal is generated which will cross zero at the desired temperature.

A further prior art embodiment implementing a temperature sensor is shown schematically in Figure 2. This embodiment shows that a voltage VPTAT and voltage VCTAT can be used to generate two currents: a first current which is temperature stable, and a second current which is linearly depended on the temperature. The two currents are compared together to determine whether a desired temperature has been reached.

The circuit shown in Figure 2 is implemented with CMOS technology, and is described in an article by Székely et al., IEEE Transactions on VLSI Systems, Vol. 5, No. 3, Sep. 1997, page 270, for example.

The last-mentioned circuit, although achieving its objective, has a drawback in that the currents it generates are dependent on the resistance of a resistor R1, which usually amounts to a few Megaohms. However, this value can have a substantial process "spread".

In addition, the thermal coefficient of the resistor R1 makes generating currents with a desired dependence on temperature difficult to achieve.

In fact, to overcome such problems, polysilicon resistors are used which exhibit trivial process and thermal coefficient variations. However, in view of the low resistivity per circuit area square (approximately 1-6 Ohm/square) of such resistors, very large silicon areas or relatively large currents must be used, resulting in increased cost.

A temperature sensor of the known type is described for instance in the article to Brokaw et al. entitled: "A temperatures sensor with single resistor set-point programming", IEEE Journal of Solid-State Circuits, vol. 31, No. 12, page 1908-1915, December 1996. Other known types of temperature sensors are described in the article to Szekely et al. entitled: "CMOS sensor for on-line thermal monitoring of VLSI circuits", IEEE Transactions on Very Large Scale Integration (VSLI) Systems, vol. 5, No. 3, pages 270-276, September 1997.

The technical problem underlying the present invention is to provide a novel temperature sensor with CMOS technology, which has adequate structural and functional features to allow a desired temperature to be detected rapidly and accurately, while reducing the area requirements for the sensor and obviating the aforementioned drawbacks of the prior art.

## Summary of the Invention

The principle of the present invention is one of using CMOS elements in place of the resistor commonly employed by conventional sensors for generating the comparison currents.

Specifically, the invention provides for the use of a first circuit portion to generate an increasing voltage as the temperature to be sensed increases, and the use of a second circuit portion to generate a decreasing voltage as the temperature to be sensed increases, as well as of a comparator for comparing such voltage values together and outputting an electric signal upon a predetermined temperature being reached.

Based on this principle, the technical problem is solved by a temperature sensor as previously indicated and defined in Claim 1.

The features and advantages of a temperature sensor according to the invention can be best appreciated from the following description of an embodiment thereof, given by way of non-limitative example with reference to the accompanying drawings.

## Brief Description of the Drawings

In the drawings:

Figure 1 is a schematic view of a temperature sensor implemented with bipolar technology, according to the prior art;

Figure 2 is a schematic view of a temperature sensor implemented with CMOS technology, according to the prior art;

Figure 3 is a schematic view of a temperature sensor implemented with CMOS technology, according to this invention;

Figure 4 shows schematically a detail of the temperature sensor of Figure 3;

Figure 5 is a plot of voltage vs. temperature illustrating the behaviors of two voltage signals in the sensor of this invention; and

Figure 6 is a plot of voltage vs. temperature illustrating the behaviors of the hysteresis output from the temperature sensor of this invention.

Detailed Description

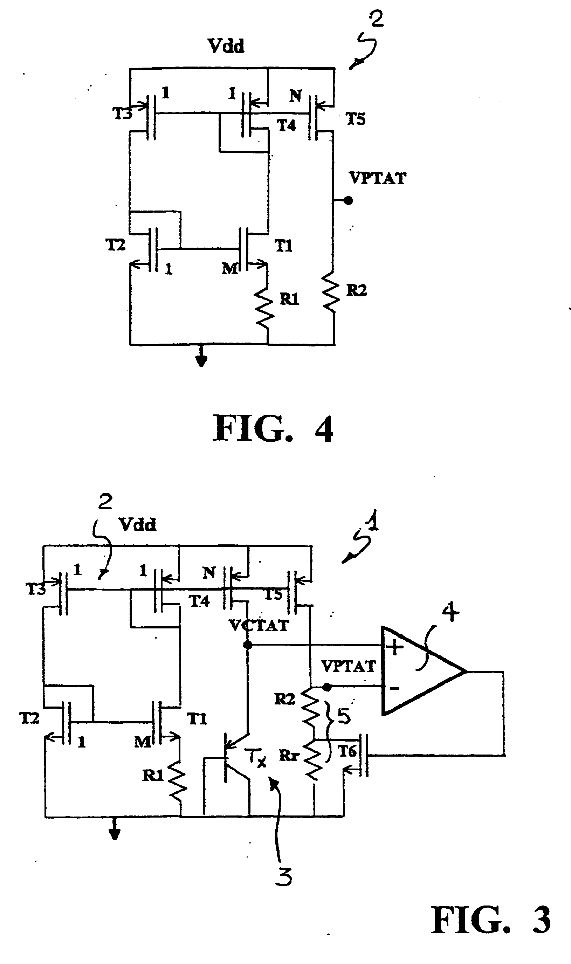

Referring to the drawing views, and in particular to the example of Figure 3, a temperature sensor implemented with CMOS or CMOS-compatible technology, according to this invention, is generally shown schematically at 1.

The sensor is intended, particularly but not exclusively, for incorporation to a fraud-counteracting device as installed in a smart card, that is in an electronic card which contains an integrated microcontroller or an integrated memory circuit.

The circuit 1 comprises a first circuit portion, generally denoted by the numeral 2, which is adapted to generate a voltage that increases linearly with the temperature to be detected.

This first circuit portion 2 is shown in detail in Figure 4, and can be regarded as being the equivalent of a bandgap voltage generator adapted to generate an output voltage VPTAT which is proportional to absolute temperature.

The circuit portion 2 comprises a first pair of NMOS transistors T1, T2 having their gate terminals connected together. The transistor T1 size is M times larger than that of the transistor T2, which may be of unit area.

A second pair of PMOS transistors T3, T4 have their gate terminals connected together. This second transistor pair T3, T4 are connected to the first transistor pair T1, T2 to form PMOS/NMOS complementary pairs comprising the transistors T3, T2 and T4, T1, respectively.

The complementary pairs T3, T2 and T4, T1 are connected between a first supply voltage reference Vdd and a second voltage reference, e.g. a ground voltage GND. More particularly, a resistor R1 is arranged to interconnect the source terminal of the transistor T1 and the ground reference.

A fifth transistor T5, specifically of the PMOS type, is connected between the supply reference Vdd and ground GND via a resistor R2. This transistor has its gate terminal connected to the gate terminals of the second transistor pair T3, T4.

The drain terminal of the fifth transistor represents the output of the circuit portion 2.

The circuit 1 further comprises a second circuit portion, generally denoted by the numeral 3, which is adapted to generate a linearly decreasing voltage with the temperature to be detected.

Advantageously in this invention, the second circuit portion 3 preferably comprises a transistor Tx which is of the vertical bipolar type and is diode connected, as an element which provides a voltage value decreasing linearly with the temperature to be detected.

The transistor Tx has its base and emitter terminals connected to the ground reference GND and has its collector connected to a comparator 4.

By adjustment of the resistance value of the resistor R2 in the first circuit portion 2, a voltage can be generated which increases linearly with temperature up to a value that equals the value of the voltage generated by the bipolar transistor Tx at the target temperature.

The circuit 1 also comprises a comparator 4 having two inputs. A first (-) comparator input is connected to the output of the first circuit portion 2 and receives the voltage signal VPTAT, the second (+) input of the comparator 4 being connected to the output of the second circuit portion 3 and receiving a voltage signal VCTAT.

The output of the second circuit portion 3 corresponds to the collector terminal of the transistor Tx.

Advantageously, the two voltages, VPTAT and VCTAT, are compared in the comparator 4, the latter detecting when they are of the same value and, accordingly, determining when the temperature of the integrated circuit which accommodates the sensor reaches a predetermined target value.

The sensor 1 of this invention only operates on resistance ratii, and eliminates all the problems connected with process spread and/or the resistor thermal coefficients.

It is important here to point out a peculiar feature of the first circuit portion 2. Assuming the NMOS transistors to be operated in the sub-threshold range, an analytical expression for the output voltage VPTAT can be found as follows:

$$\text{VPTAT} = (S5/S4)*(R2/R1)*Vt*L((S3*S1)/(S4*S2))$$

where:

Vt = kT/q, with k being Boltzman's constant and q the electron charge; and

Sx is the aspect ratio (W/L) of a transistor whichever.

By using a circuit portion 2 whose operation is based on transistors being operated in the sub-threshold range, the consumption of the sensor 1 can be kept quite low. The sensor 1 consumption would amount to about 3μA, including the comparator 4 own consumption.

The sensor of this invention further provides a hysteresis in the switching temperature effective to make it more accurate, even though this is no essential requirement to the sensor operation.

For completing the description, account should therefore be taken of that the structure of the inventive sensor 1 also provides for a hysteresis of the switching temperature of the comparator 4.

This hysteresis is introduced in order to prevent possible oscillations in the comparator output and make the sensor 1 immune to noise.

In fact, since temperature can only change very slowly, the triggering time might not be well defined, and external noise could cause a series of false switchings before the system attains steady state.

The inverting (-) input of the comparator 4 is led to the ground reference GND through a resistive divider 5 which comprises at least one resistor pair R2, Rr. An NMOS transistor T6 is connected between the output of the comparator 4 and the interconnecting node between the resistors in the divider 5.

More particularly, the gate terminal of the transistor T6 is driven by the output of the comparator 4, the drain terminal of the transistor T6 is connected to the node between the resistors, and the source terminal is connected to the ground reference.

The resistor Rr, which is short-circuited by the transistor T6 at temperatures below the triggering temperature, would be connected in as the comparator 4 switches over. Thus, the voltage value VPTAT is increased by approximately ten millivolts. This resistor Rr will be again short-circuited as temperature drops and the comparator 4 switches over again.

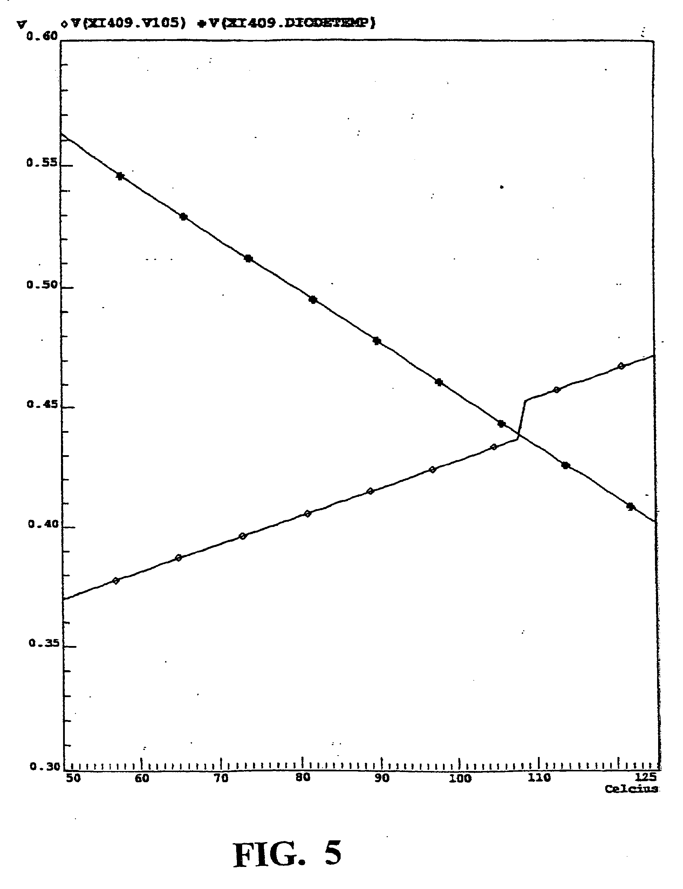

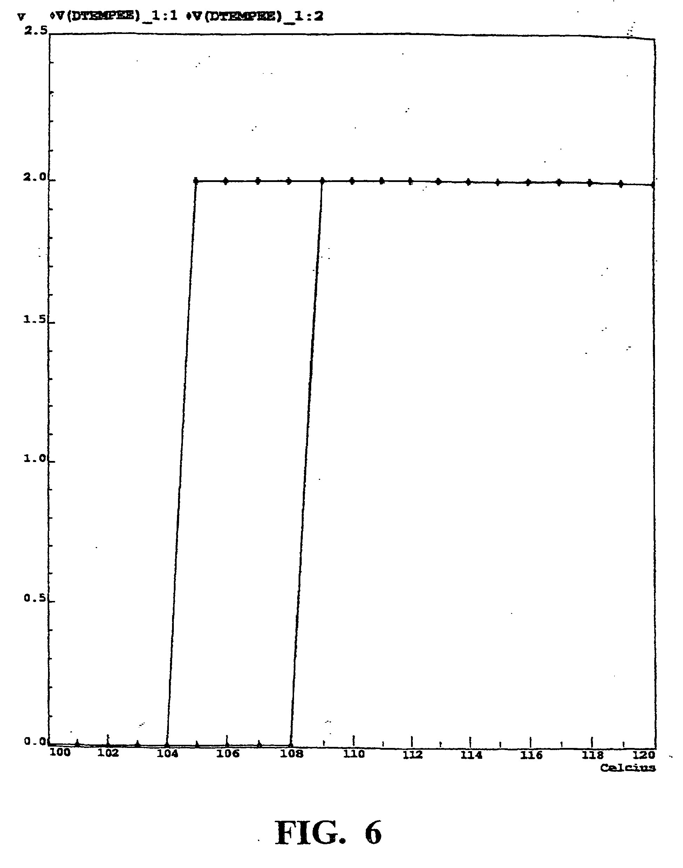

In this way, a hysteresis of about 2-3°C can be obtained in the triggering temperature, as brought out by the plots in Figures 5 and 6 showing the values of the voltages VPTAT and VCTAT versus temperature.

**Claims**

1. A CMOS technology temperature sensor of a type comprising

   - a first circuit portion (2) arranged to generate a voltage signal whose value increases with the temperature to be sensed and comprising a first pair of NMOS transistors (T1, T2) having their gate terminals connected together as well as second pair of PMOS transistors (T3, T4) having their gate terminals connected together, said second pair of PMOS transistors (T3, T4) being connected to said first pair of NMOS transistors (T1, T2) to form complementary pairs of transistors,
   - a second circuit portion (3) arranged to generate a voltage signal whose value decreases with the temperature to be sensed, and
   - a comparator (4) for comparing the values of both voltage signals generated by said first and second circuit pur Lions (2, 3) and outputting an electric signal upon a predetermined temperature being reached

   said first pair of NMOS transistors (T1, T2) of said first circuit portion (2) being operated in the sub-threshold range.

2. A sensor according to Claim 1, **characterized in that** said second circuit portion (3) comprises a bipolar transistor (Tx) generating said decreasing signal with temperature.

3. A sensor according to Claim 2, **characterized in that** said bipolar transistor is a vertical transistor connected in a diode configuration.

4. A sensor according to Claim 1, **characterized in that** said first circuit portion (2) is a bandgap voltage generator.

5. A sensor according to Claim 1, **characterized in that** a hysteresis element (T6) is provided between the output and a (-) input of the comparator (4).

6. A sensor according to Claim 5, **characterized in that** said hysteresis element is a MOS transistor (T6), being driven by the output from the comparator (4) and being connected in parallel to an additional resistor (Rr), itself connected between said comparator (-) input and a **voltage reference (GND).**

7. A sensor according to Claim 6, **characterized in that** said transistor (T6) is an NMOS type of transistor.

8. An electronic fraud-counteracting device for smart cards, **characterized in that** it comprises at least one temperature sensor as claimed in Claim 1.

9. A device according to Claim 8, **characterized in that** the sensor therein comprises at least one bipolar transistor (Tx) generating a decreasing signal with temperature.

## Patentansprüche

1. CMOS-Technik-Temperatursensor eines Typs, der aufweist:

   - einen ersten Schaltungsteil (2), der so angeordnet ist, dass er ein Spannungssignal erzeugt, dessen Wert mit der zu erfassenden Temperatur zunimmt, und der ein erstes Paar NMOS-Transistoren (T1, T2), deren Gate-Anschlüsse miteinander verbunden sind, als auch ein zweites Paar PMOS-Transistoren (T3, T4), deren Gate-Anschlüsse miteinander verbunden sind, aufweist, wobei das zweite Paar PMOS-Transistoren (T3, T4) mit dem ersten Paar NMOS-Transistoren (T1, T2) verbunden ist, um ein komplementäres Paar Transistoren zu bilden,
   - einen zweiten Schaltungsteil (3), der so angeordnet ist, dass er ein Spannungssignal erzeugt, dessen Wert mit der zu erfassenden Temperatur abnimmt, und
   - einen Komparator (4) für den Vergleich der Werte der beiden von dem ersten und dem zweiten Schaltungsteil (2, 3) erzeugten Spannungssignale und für die Ausgabe eines elektrischen Signals nach dem Erreichen einer vorherbestimmten Temperatur,

   wobei das erste Paar NMOS-Transistoren (T1, T2) des ersten Schaltungsteils (2) in dem Bereich unter dem Schwellenwert betrieben wird.

2. Sensor nach Anspruch 1, **dadurch gekennzeichnet, dass** der zweite Schaltungsteil (3) einen bipolaren Transistor (Tx) aufweist, der das mit der Temperatur abnehmende Signal erzeugt.

3. Sensor nach Anspruch 2, **dadurch gekennzeichnet, dass** der bipolare Transistor ein vertikaler Transistor ist, der in einer Diodenkonfiguration verbunden ist.

4. Sensor nach Anspruch 1, **dadurch gekennzeichnet, dass** der erste Schaltungsteil (2) ein Bandlückenspannungsgenerator ist.

5. Sensor nach Anspruch 1, **dadurch gekennzeichnet, dass** ein Hysterese-Element (T6) zwischen dem Ausgang und einem (-)-Eingang des Komparators (4) vorgesehen ist.

6. Sensor nach Anspruch 5, **dadurch gekennzeichnet, dass** das Hysterese-Element ein MOS-Transistor (T6) ist, der von dem Ausgang des Komparators (4) gesteuert wird und mit einem zusätzlichen Widerstand (Rr) parallel geschaltet ist, wobei er selber zwischen den Komparator(-)-Eingang und eine Bezugsspannung (GND) geschaltet ist.

7. Sensor nach Anspruch 6, **dadurch gekennzeichnet, dass** der Transistor (T6) ein Transistor vom NMOS-Typ ist.

8. Elektronische einem Betrug entgegenwirkende Vorrichtung für Chipkarten, **dadurch gekennzeichnet, dass** sie mindestens einen wie in Anspruch 1 beanspruchten Temperatursensor aufweist.

9. Vorrichtung nach Anspruch 8, **dadurch gekennzeichnet, dass** der Sensor darin mindestens einen bipolaren Transistor (Tx) aufweist, der ein mit der Temperatur abnehmendes Signal erzeugt.

## Revendications

1. Capteur de température en technologie CMOS d'un type comprenant :

   - une première partie de circuit (2) agencée de manière à générer un signal de tension, la valeur duquel augmente avec la température à capter et comprenant une première paire de transistors NMOS (T1, T2) ayant leurs bornes de grille connectées ensemble ainsi qu'une deuxième paire de transistors PMOS (T3, T4) ayant leurs bornes de grille connectées ensemble, ladite deuxième paire de transistors PMOS (T3, T4) étant connectée à ladite première paire de transistors NMOS (T1, T2) de manière à former des paires complémentaires de transistors,
   - une deuxième parties de circuit (3) agencée de manière à générer un signal de tension, la valeur duquel diminue avec la température à capter, et

- un comparateur (4) destiné à comparer les valeurs des deux signaux de tension générés par lesdites première et deuxième parties de circuit (2, 3) et à délivrer en sortie un signal électrique lorsqu'une température prédéterminée est atteinte,

ladite première paire de transistors NMOS (T1, T2) de ladite première partie de circuit (2) fonctionnant dans la plage au-dessous du seuil.

2. Capteur selon la revendication 1, **caractérisé en ce que** ladite deuxième partie de circuit (3) comprend un transistor bipolaire (Tx) générant ledit signal décroissant avec la température.

3. Capteur selon la revendication 2, **caractérisé en ce que** ledit transistor bipolaire est un transistor vertical connecté en configuration de diode.

4. Capteur selon la revendication 1, **caractérisé en ce que** ladite première partie de circuit (2) est un générateur de tension à bande interdite.

5. Capteur selon la revendication 1, **caractérisé en ce qu'**un élément d'hystérésis (T6) est fourni entre la sortie et une entrée (-) du comparateur (4).

6. Capteur selon la revendication 5, **caractérisé en ce que** ledit élément d'hystérésis est un transistor MOS (T6), étant piloté par la sortie issue du comparateur (4) et étant connecté en parallèle à une résistance (Rr) supplémentaire, cette dernière étant connectée entre ladite entrée (-) de comparateur et une référence de tension (GND).

7. Capteur selon la revendication 6, **caractérisé en ce que** ledit transistor (T6) est un transistor de type NMOS.

8. Dispositif électronique contre la fraude pour des cartes à puce, **caractérisé en ce qu'**il comprend au moins un capteur de température tel que revendiqué dans la revendication 1.

9. Dispositif selon la revendication 8, **caractérisé en ce que** le capteur dans celle-ci comprend au moins un transistor bipolaire (Tx) générant un signal diminuant avec la température.

Vdd

# FIG. 1

# FIG. 2

Vdd

**FIG. 4**

**FIG. 3**

FIG. 5

**FIG. 6**